# FASCICULE DE BREVET EUROPEEN

(11) **EP 2 181 774 B1**
(45) Date de publication et mention de la délivrance du brevet: **26.04.2017**
(21) Numéro de dépôt: 09360048.4
(22) Date de dépôt: 30.10.2009
(51) Int. Cl.: H02J 3/14, B05B 7/24, B05B 12/08, B05B 15/12

(54) **Procédé de gestion de la consommation de l'énergie dans un local professionnel et dispositif mettant en oeuvre ledit procédé**
Verfahren zur Verwaltung vom Energieverbrauch in einem Arbeitsraum und Vorrichtung zum Ausführen dieses Verfahrens
Method for power consumption management in a work chamber and device for its implementation

(30) Priorité: 30.10.2008 FR 0806053
(43) Date de publication de la demande: 05.05.2010
(73) Titulaire: Walusa, Sarl, 68440 Bruebach (FR)
(72) Inventeur: Waltz, Jean-Daniel, 68440 Bruebach (FR)
(74) Mandataire: Nithardt, Roland

(56) Documents cités:
- EP-A- 0 584 638
- EP-A- 1 314 484
- DE-A1- 3 722 537
- DE-A1- 4 116 897
- US-A- 4 926 746

## Description

### Domaine technique :

La présente invention concerne un procédé et un dispositif de gestion de la consommation de l'énergie d'un local professionnel utilisé pour apprêter, peindre, traiter, sabler, souder, mélanger tout type de pièces et/ou de matières, par projection, pulvérisation, imprégnation d'un produit liquide, gazeux, granuleux ou pulvérulent, par soudage ou par mélangeur, comportant au moins un équipement nécessaire au fonctionnement dudit local et constituant un premier consommateur d'énergie, ledit équipement comportant un dispositif de ventilation, un dispositif d'éclairage et/ou un dispositif de chauffage, ce local étant agencé pour abriter au moins un outil ou un appareil fonctionnant de manière discontinue et constituant un second consommateur d'énergie, ledit outil ou appareil comportant un pistolet de projection, un poste de soudure, une lance de sablage ou un mélangeur de matières.

### Technique antérieure :

Un domaine d'application particulier de l'invention concerne les cabines de peinture utilisées dans différentes industries pour apprêter, peindre, traiter tout type de pièces métalliques ou non, par projection ou pulvérisation d'un produit liquide, pulvérulent ou autre, tel qu'une résine, un apprêt, un colorant ou similaire, au moyen par exemple d'un pistolet de peinture connecté à un réservoir de peinture et alimenté par une source d'air comprimé pour créer le jet de peinture par surpression ou dépression. Pour assurer la sécurité de l'opérateur, l'air de ces cabines de peinture est en permanence renouvelé grâce à des ventilateurs situés en amont et aval de la cabine agencés pour créer une circulation d'air forcée dans un sens horizontal ou vertical et évacuer automatiquement les solvants dégagés par la peinture. Ce circuit d'air comporte habituellement un dispositif de chauffage permettant d'élever la température de l'air prélevé à l'extérieur du local avant de l'injecter à l'intérieur du local. Enfin, ce type de local est complété par un système d'éclairage. Dans l'industrie, les cabines de peinture fonctionnent généralement de manière continue générant une consommation d'énergie très importante par les consommateurs d'énergie qui sont le circuit de ventilation, le dispositif de chauffage de l'air et l'éclairage.

Or on a constaté que le temps de fonctionnement d'une cabine de peinture se répartit généralement comme suit : 1/3 du temps en mode peinture, 1/3 du temps en mode désolvatation et 1/3 du temps en mode attente où elle fonctionne pour rien. En mode peinture, la législation impose des vitesses d'air minimales à respecter soit 0,5 m/s de vitesse d'air dans le cas d'une circulation horizontale et 0,3 m/s de vitesse d'air dans le cas d'une circulation verticale. En mode désolvatation, qui correspond à la phase de séchage de la peinture dans laquelle les solvants s'évaporent, la législation demande à ce que l'air ambiant contienne moins de solvants que les valeurs limites d'exposition ou d'explosivité. En pratique, on prend comme objectif à atteindre le quart de ces valeurs limites. A l'arrêt de la projection, vu la faible vitesse d'évaporation des solvants contenus dans la peinture fraîchement projetée, il est possible de réduire de façon conséquente le débit d'air et donc économiser l'énergie, notamment en hiver. En mode attente, qui suit le mode désolvatation, il est possible d'arrêter la cabine de peinture en toute sécurité permettant également une grande économie d'énergie.

La solution décrite dans la publication FR 2 445 495 propose d'asservir le déplacement d'un clapet d'obturation disposé dans le circuit de ventilation de la cabine de peinture en fonction de l'utilisation du pistolet de peinture détectée par un interrupteur localisé sur un crochet auquel est suspendu le pistolet quand il n'est pas utilisé. L'inconvénient majeur de cette solution réside dans le fait que l'opérateur ne prend pas la précaution de remettre le pistolet sur son crochet. De plus, l'économie d'énergie est limitée au circuit d'air et ne s'étend pas aux autres équipements nécessaires au fonctionnement de la cabine. Une solution équivalente est décrite dans la publication DE 41 16 897.

La solution décrite dans la publication EP 1 314 484 propose de diviser la cabine de peinture en une pluralité de zones adjacentes pouvant être ventilées de manière indépendante les unes par rapport aux autres en fonction de la présence ou non d'un opérateur. De manière similaire, la publication US 4,926,746 propose de ne ventiler qu'une partie du local en déplaçant l'arrivée d'air frais en fonction de la zone effective où travaille l'opérateur, la commande de la ventilation pouvant être asservie par une temporisation.

Il n'existe à ce jour aucun dispositif permettant de gérer la consommation de l'énergie de ce type de local professionnel de manière satisfaisante, optimisée et systématique.

L'exemple d'application de l'invention à une cabine de peinture n'est pas exhaustif et s'étend bien entendu à toute application, dans toute industrie, nécessitant une installation ou un local professionnel, tel qu'un local de soudure, une cabine de sablage, une chambre de mélange de matières, ou similaire, comportant des équipements spécifiques, tels qu'un dispositif d'éclairage, un dispositif de ventilation, un circuit de chauffage, un poste de soudure, une lance de sablage, un mélangeur, ou similaire, alimentés en énergie, telle qu'en énergie électrique, hydraulique, pneumatique, ou similaire, pour protéger les personnes et/ou le matériel contre un risque ou un danger non permanent lié au fonctionnement d'un outil, d'un appareil ou d'une machine également alimenté en énergie, dans le but de permettre à un opérateur de travailler en toute sécurité et dans le respect des normes imposées par la réglementation.

### Exposé de l'invention :

La présente invention propose d'apporter une solution aux problèmes évoqués ci-dessus au moyen d'un procédé et d'un dispositif de gestion de la consommation de l'énergie tenant compte des temps d'attente ou de pose durant lesquels le local n'est pas utilisé ou partiellement utilisé et ses équipements n'ont pas besoin de fonctionner à plein régime pour assurer la sécurité des personnes et/ou des biens, afin de réduire considérablement la consommation de l'énergie, solution dans laquelle le dispositif est paramétrable, facilement adaptable à différentes applications ainsi qu'à des installations existantes déjà en service, y compris dans des installations à haut risque d'explosion (ATEX).

Dans ce but, l'invention concerne un procédé du genre indiqué en préambule, caractérisé en ce que l'on asservit automatiquement l'alimentation en énergie du premier consommateur d'énergie en fonction de l'utilisation effective du second consommateur d'énergie pour limiter la consommation d'énergie dans ledit local aux besoins réels de l'opérateur et en ce qu'après avoir détecté l'utilisation effective dudit second consommateur d'énergie, on interdit le fonctionnement de ce second consommateur d'énergie tant que ledit premier consommateur d'énergie n'a pas atteint son fonctionnement nominal pour autoriser une utilisation sécurisée dudit local professionnel.

Ainsi, l'alimentation en énergie des équipements nécessaires au fonctionnement du local est adaptée aux besoins réels de l'opérateur et ce sans son intervention, permettant de réaliser des économies d'énergie importantes.

L'on détecte avantageusement l'utilisation effective du second consommateur d'énergie par au moins un capteur qui mesure une grandeur physique représentative de l'utilisation effective dudit second consommateur d'énergie et qui peut être choisie dans le groupe comprenant une grandeur électrique, hydraulique, aéraulique.

On peut introduire au moins une temporisation pour différer l'alimentation en énergie du premier consommateur d'énergie par rapport au signal fourni par le capteur.

Dans ce but, l'invention concerne également un dispositif du genre indiqué en préambule, caractérisé en ce qu'il comporte au moins une unité de commande programmable agencée pour alimenter automatiquement en énergie ledit premier consommateur d'énergie en fonction d'une grandeur physique représentative de l'utilisation effective du second consommateur d'énergie pour limiter la consommation d'énergie dans ledit local aux besoins réels de l'opérateur et en ce qu'après avoir détecté l'utilisation effective dudit second consommateur d'énergie, ladite unité de commande est agencée pour interdire le fonctionnement de ce second consommateur d'énergie tant que ledit premier consommateur d'énergie n'a pas atteint son fonctionnement nominal pour autoriser une utilisation sécurisée dudit local professionnel.

Dans une forme de réalisation préférée, le dispositif comporte au moins un capteur agencé pour mesurer ladite grandeur physique qui peut être choisie dans le groupe comprenant une grandeur électrique, hydraulique, aéraulique.

Dans le cas où le premier consommateur d'énergie comporte au moins un ventilateur, le dispositif peut comporter au moins un variateur de fréquence piloté par l'unité de commande pour faire varier la vitesse dudit ventilateur entre une vitesse nulle et une vitesse nominale en fonction au moins du signal dudit capteur.

Dans le cas où le premier consommateur d'énergie comporte au moins un dispositif de chauffage, le dispositif peut comporter au moins des moyens de régulation pilotés par l'unité de commande pour faire varier la puissance de chauffage entre une valeur nulle et une valeur nominale en fonction au moins du signal du capteur.

Enfin, dans le cas où le premier consommateur d'énergie comporte au moins un dispositif d'éclairage, le dispositif peut comporter au moins un organe de commande piloté par l'unité de commande pour faire varier l'intensité de l'éclairage entre une valeur nulle et une valeur nominale en fonction au moins du signal du capteur.

L'unité de commande peut comporter des temporisations agencées pour différer la commande du premier consommateur d'énergie par rapport au signal du capteur.

Si le local professionnel est une cabine de peinture et le second consommateur d'énergie comporte un pistolet de projection alimenté par un circuit d'air comprimé, le capteur peut être un débitmètre. Dans ce cas, le dispositif peut comporter une électrovanne disposée sur le circuit d'air comprimé et alimentée par l'unité de commande pour couper le circuit d'air comprimé tant que le ventilateur n'a pas atteint sa vitesse nominale pour autoriser un fonctionnement sécurisé de la cabine de peinture.

Le dispositif de gestion selon l'invention peut avantageusement être utilisé dans tout local comportant un dispositif de ventilation, tel qu'une cabine de peinture abritant au moins un pistolet de projection alimenté par un circuit d'air sous pression, un local de soudure abritant au moins un poste de soudure alimenté par un circuit électrique, une cabine de sablage abritant au moins une lance de sablage alimentée par un circuit d'air sous pression, une chambre de mélange de matières abritant au moins un mélangeur de matières alimenté par un circuit consommant de l'énergie, ou toute autre installation.

### Description sommaire des dessins :

La présente invention et ses avantages apparaîtront mieux dans la description suivante d'un mode de réalisation donné à titre d'exemple non limitatif, en référence aux dessins annexés, dans lesquels :
- la figure 1 représente schématiquement une cabine de peinture équipée d'un dispositif de gestion de la consommation de l'énergie selon l'invention et abritant un pistolet de projection dont l'échelle n'est volontairement pas respectée, et
- la figure 2 représente par des diagrammes les cycles de fonctionnement de la cabine de peinture en fonction des cycles de fonctionnement du pistolet de projection selon le procédé de gestion de l'invention.

### Illustrations de l'invention et meilleure manière de la réaliser :

Le procédé de gestion de la consommation de l'énergie ainsi que le dispositif agencé pour mettre en oeuvre ce procédé sont décrits en référence à une cabine de peinture mais peuvent bien entendu s'étendre à tout autre installation ou local professionnel pour toute autre application dans laquelle il est utile de pouvoir économiser de l'énergie.

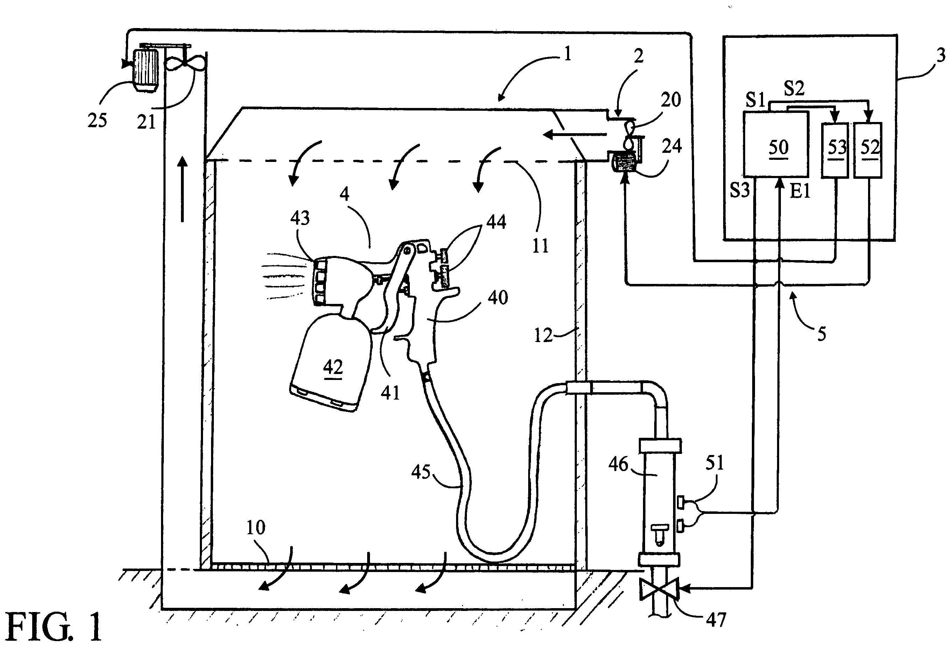

La cabine de peinture 1 est représentée schématiquement par la figure 1 et comporte un plancher 10, un plafond 11, des parois latérales 12 et une porte d'entrée (non représentée). Cette cabine de peinture 1 comporte des équipements nécessaires à son fonctionnement et constituant des premiers consommateurs d'énergie. Ces équipements comportent notamment un dispositif d'éclairage (non représenté), un dispositif de ventilation 2 pour renouveler l'air contenu dans la cabine et un dispositif de chauffage (non représenté) pour élever la température de l'air entrant dans la cabine. Le dispositif de ventilation 2 comporte au moins un ventilateur disposé pour créer une circulation d'air forcée par aspiration. Dans l'exemple représenté, il comporte deux ventilateurs 20, 21 : un ventilateur amont 20 qui prélève de l'air neuf à l'extérieur de la cabine et l'injecte à l'intérieur de la cabine au travers du plafond 11 par l'intermédiaire d'un plénum 22, et un ventilateur aval 21 qui prélève l'air vicié à l'intérieur de la cabine au travers du plancher 10 par l'intermédiaire d'un conduit 23 et l'évacue à l'extérieur de la cabine, en circuit ouvert. Ces ventilateurs 20, 21 crée une circulation d'air forcée à l'intérieur de la cabine dans le sens vertical. Il est également possible de disposer ces ventilateurs pour générer une circulation d'air forcée à l'intérieur de la cabine dans le sens horizontal. Chacun de ces ventilateurs 20, 21 est entraîné en rotation par un moteur 24, 25 alimenté en courant depuis une armoire électrique 3. Un interrupteur principal (non représenté) permet la mise en route et l'arrêt de la cabine de peinture 1, à savoir des équipements assurant le fonctionnement sécurisé de cette cabine.

Cette cabine de peinture 1 abrite un pistolet de projection 4 connu en soi, destiné à être actionné par un opérateur (non représenté), et constituant un second consommateur d'énergie. Il comporte notamment une poignée 40, une gâchette 41, un réservoir 42 de produit, une tête de projection 43 et des robinets 44. Le produit à projeter peut être un apprêt, une résine, une peinture ou similaire, permettant de traiter la surface d'une pièce métallique ou non (non représentée). Ce pistolet de projection 4 est alimenté en air comprimé fourni par un compresseur (non représenté), un réseau d'air comprimé ou similaire, par l'intermédiaire d'un tuyau flexible 45, d'un débitmètre 46 et d'une électrovanne 47.

La cabine de peinture 1 est équipée d'un dispositif 5 de gestion de la consommation de l'énergie agencé pour asservir le fonctionnement des équipements de la cabine de peinture 1, tels que le dispositif de ventilation 2, le dispositif de chauffage et/ou le dispositif d'éclairage, en fonction de l'utilisation effective du pistolet de projection 4. Il comporte une unité de commande 50 paramétrable ou programmable, par exemple logée dans l'armoire électrique 3.

Cette unité de commande 50 est pourvue d'un nombre d'entrées E équivalent au moins au nombre d'appareils seconds consommateurs d'énergie à détecter. Dans l'exemple représenté, elle comporte une entrée E1 qui reçoit un signal d'entrée provenant d'un capteur 51 lié au débitmètre 46 pour détecter ou non la consommation d'air comprimé (grandeur aéraulique) lors du fonctionnement ou non du pistolet de projection 4. Lorsque l'opérateur actionne la gâchette 41 du pistolet de projection 4, il ouvre le circuit d'air comprimé, le capteur 51 détecte le flux d'air et fournit un signal d'entrée égal à 1. A l'inverse, dès que l'opérateur relâche la gâchette 41, il ferme le circuit d'air comprimé, le capteur 51 ne détecte aucun flux d'air et fournit un signal d'entrée égal à 0. Bien entendu, tout autre moyen de détection d'un flux de fluide peut être utilisé comme par exemple un pressostat différentiel, ou similaire.

L'unité de commande 50 est également pourvue d'un nombre de sorties S au moins équivalent au nombre d'équipements premiers consommateurs d'énergie à commander en fonction au moins des signaux d'entrée, mais aussi en fonction de valeurs de consigne paramétrées selon le type d'équipement à commander. Dans l'exemple représenté, elle comporte deux sorties S1 et S2 qui reçoivent de l'unité de commande 50 un signal de sortie destiné à commander le fonctionnement des ventilateurs 20, 21 par l'intermédiaire de variateurs de fréquence 52, 53 agencés pour faire varier la vitesse des moteurs 24, 25 entre une vitesse nulle Vo et une vitesse nominale Vn. La vitesse nominale des ventilateurs 20, 21 correspond au fonctionnement normal ou à plein régime de la cabine, en mode peinture avec une vitesse d'air minimale imposée.

Dans l'exemple représenté, cette unité de commande 50 comporte une troisième sortie S3 qui envoie un signal à l'électrovanne 47 pour commander l'ouverture et la fermeture du circuit d'air comprimé alimentant le pistolet de projection 4 en fonction de la vitesse du ventilateur, comme décrit plus loin.

Bien entendu, l'unité de commande 50 peut comporter d'autres sorties Sn pour commander les autres équipements premiers consommateurs d'énergie comme le dispositif de chauffage de l'air et le dispositif d'éclairage de la cabine de peinture 1 (non représentés) par l'intermédiaire de tout moyen de commande, de régulation ou similaire, tel qu'un interrupteur, un limiteur de tension, un thyristor, une vanne à trois voies, une vanne modulante, etc. alimenté par toute source d'énergie telle qu'électrique, hydraulique, pneumatique, etc. pour faire varier la puissance du chauffage ainsi que l'intensité de l'éclairage entre des valeurs nulles et nominales, en fonction au moins du signal du capteur mais aussi de valeurs de consigne paramétrées.

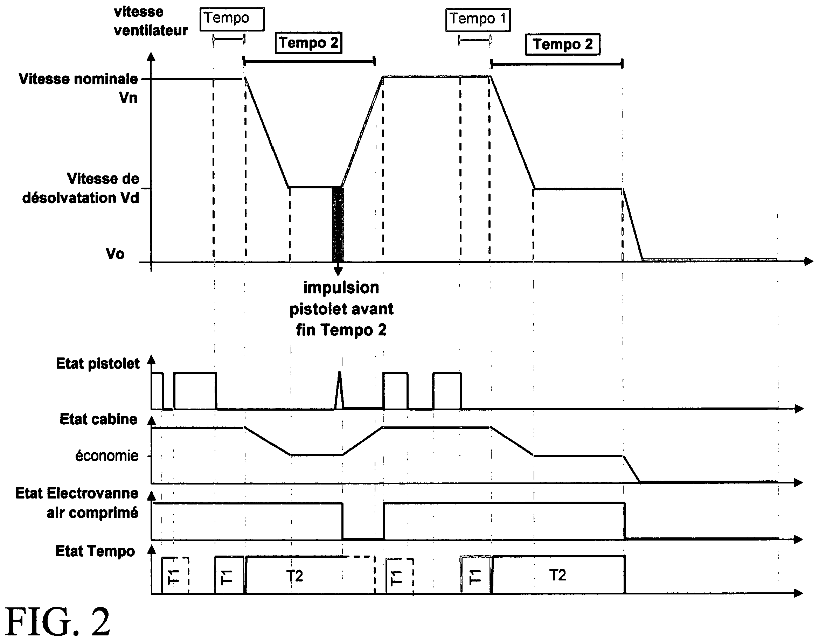

Cette unité de commande 50 comporte également des temporisations T1, T2 qui sont paramétrables ou programmables et dont l'explication est donnée ci-après en référence aux diagrammes de la figure 2, qui permet d'illustrer le fonctionnement du procédé de gestion de la consommation de l'énergie selon l'invention. Le scénario de fonctionnement donné à titre d'exemple met en oeuvre deux temporisations T1 et T2. Toutefois, ce nombre n'est pas limité et dépend du scénario de fonctionnement souhaité.

Le diagramme supérieur représente la vitesse des ventilateurs 20, 21 du dispositif de ventilation 2, et le diagramme inférieur représente l'état de fonctionnement, en partant du bas vers le haut, des temporisations T1, T2 prévues dans l'unité de commande 50, de l'électrovanne 47 du circuit d'air comprimé alimentant le pistolet de projection 4, de la cabine de peinture 1 et du pistolet de projection 4. Le diagramme de fonctionnement des dispositifs d'éclairage et de chauffage de la cabine de peinture 1 n'est pas représenté mais peut se superposer au diagramme de fonctionnement du dispositif de ventilation 2.

Lorsque la cabine de peinture 1 est arrêtée, l'opérateur la met en route en actionnant manuellement l'interrupteur principal (non représenté). La cabine de peinture 1 démarre automatiquement en mode peinture : les moteurs 24, 25 des ventilateurs 20, 10 sont alimentés en énergie électrique et amenés à leur vitesse nominale Vn de sorte que le dispositif de ventilation 2 crée une circulation d'air à l'intérieur de la cabine dont la vitesse d'air minimale est au moins égale à la réglementation en vigueur.
0) Le point de départ des diagrammes correspond au mode peinture : la vitesse ventilateur est égale à la vitesse nominale Vn et l'état du pistolet, de la cabine et de l'électrovanne est égal à 1. Chaque changement d'état représenté sur l'un ou l'autre des diagrammes est expliqué dans ce qui suit, en référence également à la figure 1.
1) Si l'opérateur interrompt momentanément son opération de peinture, il relâche la gâchette 41 et le pistolet passe à l'état 0. L'unité de commande 50 reçoit l'information par le signal d'entrée E1 provenant du capteur 51 qui détecte que le pistolet ne consomme plus d'air et passe à l'état 0. Une première temporisation T1 d'une durée paramétrable permet de maintenir la vitesse ventilateur à la valeur nominale Vn et l'état de la cabine égal à 1.
2) Si l'opérateur reprend son opération de peinture avant la fin de la première temporisation T1, il actionne la gâchette 41 et le pistolet passe à l'état 1. L'unité de commande 50 reçoit l'information par le signal d'entrée E1 provenant du capteur 51 qui détecte que le pistolet consomme à nouveau de l'air et passe à l'état 1. La vitesse ventilateur est restée à la valeur nominale Vn et la cabine à l'état 1.
3) Si l'opérateur interrompt durablement son opération de peinture, il relâche la gâchette 41 et le pistolet passe à l'état 0. A nouveau, l'unité de commande 50 reçoit l'information par le signal d'entrée E1 provenant du capteur 51 qui détecte que le pistolet ne consomme plus d'air et passe à l'état 0.
4) Si à la fin de la première temporisation T1, l'état du pistolet est toujours à 0, l'unité de commande 50 envoie un signal de sortie S1, S2 aux variateurs de fréquence 52, 53 pour réduire la vitesse ventilateur à une vitesse de désolvatation Vd, pendant une seconde temporisation T2. La cabine passe en mode économie.
5) Si l'opérateur veut reprendre son opération de peinture avant la fin de la seconde temporisation T2, l'impulsion qu'il donne sur la gâchette 41 est transmise à l'unité de commande 50 par le signal d'entrée E1 provenant du capteur 51 qui détecte que le pistolet consomme de l'air et passe à l'état 1.
6) Cette unité de commande 50 envoie un signal de sortie S3 à l'électrovanne 47 pour la fermer (état égal à 0) et interdire ainsi le fonctionnement du pistolet tant que la vitesse ventilateur n'est pas revenue à la vitesse nominale Vn et la cabine à l'état 1. Comme les ventilateurs sont déjà en mouvement, ils atteindront plus vite leur vitesse nominale Vn et le pistolet sera actif plus rapidement.
7) Si l'opérateur ne reprend pas son opération de peinture avant la fin de la seconde temporisation T2 (voir fin des diagrammes), le pistolet reste à l'état 0, l'unité de commande 50 envoie un signal de sortie S1, S2 aux variateurs de fréquence 52, 53 pour réduire la vitesse ventilateur à une vitesse nulle Vo et la cabine de même que l'électrovanne passent à l'état 0.
Ce cycle peut recommencer ainsi indéfiniment.
En fin de travail, la cabine de peinture 1 doit être arrêtée manuellement par action sur l'interrupteur principal.

Le fonctionnement de ce procédé de gestion de la consommation d'énergie est synthétisé dans l'organigramme ci-dessous. Bien entendu, tout autre scénario de fonctionnement est envisageable.

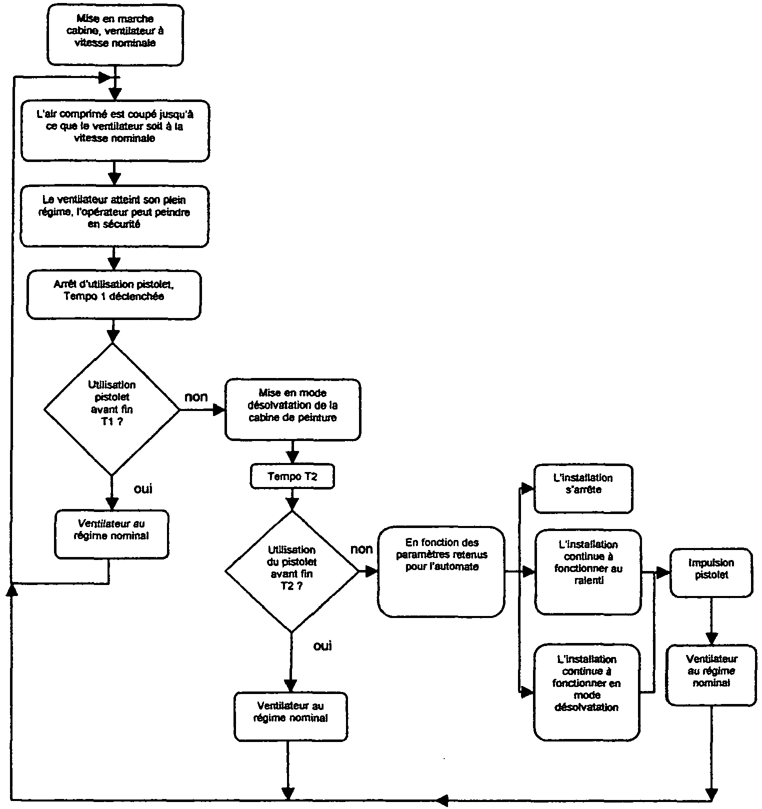

Il ressort clairement de cette description que l'invention permet d'atteindre les buts fixés, à savoir des économies d'énergie considérables au moyen d'un dispositif de gestion simple, automatique et fiable. Notamment en divisant la vitesse des ventilateurs par deux, entre le mode peinture et le mode désolvatation, on réduit leur consommation électrique d'environ 70%. Lorsque la cabine tourne en mode économie ou désolvatation, le dispositif de chauffage consomme de 30 à 60% d'énergie de chauffage en moins, et la consommation du dispositif d'éclairage peut être paramétrée entre 0 et 100%. Les variateurs de fréquence permettent en plus une réinjection du courant dans le réseau.

La présente invention s'applique aisément à tout autre local professionnel, comme par exemple un local de soudure qui comporte notamment un dispositif de ventilation et abrite au moins un poste de soudure alimenté par un circuit électrique, une cabine de sablage qui comporte notamment un dispositif de ventilation et abrite au moins une lance de sablage alimentée par un circuit d'air sous pression, une chambre de mélange de matières qui comporte notamment un dispositif de ventilation et abrite au moins un mélangeur de matières alimenté par un circuit consommant de l'énergie électrique ou autre.

La présente invention n'est bien entendu pas limitée à l'exemple de réalisation décrit mais s'étend à toute modification et variante évidentes pour un homme du métier tout en restant dans l'étendue de la protection définie dans les revendications annexées.

## Revendications

1. Procédé de gestion de la consommation de l'énergie dans un local professionnel (1) utilisé pour apprêter, peindre, traiter, sabler, souder, mélanger tout type de pièces et/ou de matières, par projection, pulvérisation, imprégnation d'un produit liquide, gazeux, granuleux ou pulvérulent, par soudage ou par mélangeur, comportant au moins un équipement (2) nécessaire au fonctionnement sécurisé dudit local et constituant un premier consommateur d'énergie, ledit équipement comportant un dispositif de ventilation, un dispositif d'éclairage et/ou un dispositif de chauffage, ce local étant destiné à abriter au moins un outil (4) ou un appareil travaillant de manière discontinue et constituant un second consommateur d'énergie, ledit outil ou appareil comportant un pistolet de projection, un poste de soudure, une lance de sablage ou un mélangeur de matières, **caractérisé en ce que** l'on asservit automatiquement l'alimentation en énergie du premier consommateur d'énergie (2) en fonction de l'utilisation effective du second consommateur d'énergie (4) pour limiter la consommation d'énergie dans ledit local (1) aux besoins réels de l'opérateur et **en ce qu'**après avoir détecté l'utilisation effective dudit second consommateur d'énergie (4), on interdit le fonctionnement de ce second consommateur d'énergie tant que ledit premier consommateur d'énergie (2) n'a pas atteint son fonctionnement nominal pour autoriser une utilisation sécurisée dudit local professionnel (1).

2. Procédé selon la revendication 1, **caractérisé en ce que** l'on détecte l'utilisation effective du second consommateur d'énergie (4) par au moins un capteur (51) qui mesure une grandeur physique représentative de l'utilisation effective dudit second consommateur d'énergie (4).

3. Procédé selon la revendication 2, **caractérisé en ce que** l'on choisit ladite grandeur physique dans le groupe comprenant une grandeur électrique, hydraulique, aéraulique.

4. Procédé selon la revendication 2, **caractérisé en ce que** l'on introduit au moins une temporisation (T1, T2) pour différer l'alimentation en énergie dudit premier consommateur d'énergie (2) par rapport au signal fourni par ledit capteur (51).

5. Dispositif (5) de gestion de la consommation de l'énergie dans un local professionnel (1) utilisé pour apprêter, peindre, traiter, sabler, souder, mélanger tout type de pièces et/ou de matières, par projection, pulvérisation, imprégnation d'un produit liquide, gazeux, granuleux ou pulvérulent, par soudage ou par mélangeur, comportant au moins un équipement (2) nécessaire au fonctionnement sécurisé dudit local et constituant un premier consommateur d'énergie, ledit équipement comportant un dispositif de ventilation, un dispositif d'éclairage et/ou un dispositif de chauffage, ce local étant destiné à abriter au moins un outil (4) ou un appareil travaillant de manière discontinue et constituant un second consommateur d'énergie, ledit outil ou appareil comportant un pistolet de projection, un poste de soudure, une lance de sablage ou un mélangeur de matières, **caractérisé en ce que** ledit dispositif (5) comporte au moins une unité de commande (50) programmable agencée pour alimenter automatiquement en énergie ledit premier consommateur d'énergie (2) en fonction d'une grandeur physique représentative de l'utilisation effective du second consommateur d'énergie (4) pour limiter la consommation d'énergie dans ledit local (1) aux besoins réels de l'opérateur et **en ce qu'**après avoir détecté l'utilisation effective dudit second consommateur d'énergie (4), ladite unité de commande (50) est agencée pour interdire le fonctionnement de ce second consommateur d'énergie tant que ledit premier consommateur d'énergie (2) n'a pas atteint son fonctionnement nominal pour autoriser une utilisation sécurisée dudit local professionnel (1).

6. Dispositif selon la revendication 5, **caractérisé en ce que** ledit dispositif (5) comporte au moins un capteur (51) agencé pour mesurer ladite grandeur physique représentative de l'utilisation effective du second consommateur d'énergie (4).

7. Dispositif selon la revendication 6, **caractérisé en ce que** ledit capteur (51) est agencé pour mesurer une grandeur physique choisie dans le groupe comprenant une grandeur électrique, hydraulique, aéraulique.

8. Dispositif selon la revendication 6, dans lequel ledit premier consommateur d'énergie comporte au moins un ventilateur (20, 21), **caractérisé en ce que** ledit dispositif (5) comporte au moins un variateur de fréquence (52, 53) piloté par ladite unité de commande (50) pour faire varier la vitesse dudit ventilateur (20, 21) entre une vitesse nulle (Vo) et une vitesse nominale (Vn) en fonction au moins du signal dudit capteur (51).

9. Dispositif selon la revendication 6, dans lequel ledit premier consommateur d'énergie comporte au moins un dispositif de chauffage, **caractérisé en ce qu'**il comporte au moins des moyens de régulation pilotés par ladite unité de commande (5) pour faire varier la puissance de chauffage entre une valeur nulle et une valeur nominale en fonction au moins du signal dudit capteur (51).

10. Dispositif selon la revendication 6, dans lequel ledit premier consommateur d'énergie comporte au moins un dispositif d'éclairage, **caractérisé en ce qu'**il comporte au moins un organe de commande piloté par ladite unité de commande (5) pour faire varier l'intensité d'éclairage entre une valeur nulle et une valeur nominale en fonction au moins du signal dudit capteur (51).

11. Dispositif selon l'une quelconque des revendications 5 à 10, **caractérisé en ce que** ladite unité de commande (5) comporte des temporisations (T1, T2) agencés pour différer la commande dudit premier consommateur d'énergie (2) par rapport au signal dudit capteur (51).

12. Dispositif selon la revendication 8, dans lequel ledit local professionnel est une cabine de peinture (1) et ledit second consommateur d'énergie comporte un pistolet de projection (4) alimenté par un circuit d'air comprimé, **caractérisé en ce que** ledit capteur (51) est un débitmètre.

13. Dispositif selon la revendication 12, **caractérisé en ce qu'**il comporte une électrovanne (47) disposée sur ledit circuit d'air comprimé et alimentée par ladite unité de commande (5) pour couper le circuit d'air comprimé tant que le ventilateur (20, 21) n'a pas atteint sa vitesse nominale (Vn) pour autoriser un fonctionnement sécurisé de ladite cabine de peinture (1).

14. Utilisation du dispositif (5) de gestion de la consommation de l'énergie selon l'une quelconque des revendications 5 à 13, dans une cabine de peinture (1) comportant un dispositif de ventilation (2) et abritant au moins un pistolet de projection (4) alimenté par un circuit d'air sous pression.

15. Utilisation du dispositif (5) de gestion de la consommation de l'énergie selon l'une quelconque des revendications 5 à 13, dans un local de soudure comportant un dispositif de ventilation et abritant au moins un poste de soudure alimenté par un circuit électrique.

16. Utilisation du dispositif (5) de gestion de la consommation de l'énergie selon l'une quelconque des revendications 5 à 13, dans une cabine de sablage comportant un dispositif de ventilation et abritant au moins une lance de sablage alimentée par un circuit d'air sous pression.

17. Utilisation du dispositif (5) de gestion de la consommation de l'énergie selon l'une quelconque des revendications 5 à 13, dans une chambre de mélange de matières comportant un dispositif de ventilation et abritant au moins un mélangeur de matières alimenté par un circuit consommant de l'énergie.

## Patentansprüche

1. Verfahren zur Verwaltung des Energieverbrauchs in einem Arbeitsraum (1), der verwendet wird zum Grundieren, Spritzen, Behandeln, Sandstrahlen, Schweißen, Mischen jeder Art Teile und/oder Materialien durch Sprühen, Spritzen, Imprägnierung eines flüssigen, gasförmigen, körnigen oder pulverförmigen Produkts, durch Schweißen oder durch einen Mischer, bestehend aus zumindest einer für den sicheren Betrieb von besagtem Raum erforderlichen Einrichtung (2), die einen ersten Energieverbraucher bildet, wobei besagte Einrichtung eine Lüftungsvorrichtung, eine Beleuchtungsvorrichtung und/oder eine Erwärmungsvorrichtung beträgt, wobei dieser Raum dazu bestimmt ist, zumindest ein diskontinuierlich arbeitendes Werkzeug (4) oder Gerät zu enthalten, das einen zweiten Energieverbraucher bildet, wobei besagtes Werkzeug oder Gerät eine Spritzpistole, ein Schweißgerät, eine Sandstrahllanze oder einen Materialmischer beträgt, **dadurch gekennzeichnet, dass** man die Energieversorgung des ersten Energieverbrauchers (2) automatisch in Abhängigkeit des tatsächlichen Verbrauchs des zweiten Energieverbrauchers (4) regelt, um den Energieverbrauch in besagtem Raum (1) auf den tatsächlichen Bedarf des Bedieners zu begrenzen und dass, nachdem die tatsächliche Benutzung von besagtem zweiten Energieverbraucher (4) festgestellt wurde, man den Betrieb dieses zweiten Energieverbrauchers unterbindet bis besagter erster Energieverbraucher (2) seinen nominalen Betriebszustand erreicht hat, um eine sichere Benutzung von besagtem Arbeitsraum (1) zu erlauben.

2. Verfahren nach Anspruch 1, **dadurch gekennzeichnet, dass** man die tatsächliche Benutzung des zweiten Energieverbrauchers (4) mit Hilfe zumindest eines Sensors (51) feststellt, der eine physikalische Größe misst, die für die tatsächliche Benutzung des zweiten Energieverbrauchers (4) repräsentativ ist.

3. Verfahren nach Anspruch 2, **dadurch gekennzeichnet, dass** man besagte physikalische Größe in der Gruppe bestehend aus einer elektrischen, hydraulischen, lufttechnischen Größe wählt.

4. Verfahren nach Anspruch 2, **dadurch gekennzeichnet, dass** man zumindest eine Verweilzeit (T1, T2) einführt, um die Energieversorgung von besagtem erstem Energieverbraucher (2) in Bezug auf das von besagtem Sensor (51) gelieferte Signal zu verzögern.

5. Vorrichtung (5) zur Verwaltung des Energieverbrauchs in einem Arbeitsraum (1), der verwendet wird zum Grundieren, Spritzen, Behandeln, Sandstrahlen, Schweißen, Mischen jeder Art Teile und/oder Materialien durch Sprühen, Spritzen, Imprägnierung eines flüssigen, gasförmigen, körnigen oder pulverförmigen Produkts, durch Schweißen oder durch einen Mischer, bestehend aus zumindest einer für den sicheren Betrieb von besagtem Raum erforderlichen Einrichtung (2), die einen ersten Energieverbraucher bildet, wobei besagte Einrichtung eine Lüftungsvorrichtung, eine Beleuchtungsvorrichtung und/oder eine Erwärmungsvorrichtung beträgt, wobei dieser Raum dazu bestimmt ist, zumindest ein diskontinuierlich arbeitendes Werkzeug (4) oder Gerät zu enthalten, das einen zweiten Energieverbraucher bildet, wobei besagtes Werkzeug oder Gerät eine Spritzpistole, ein Schweißgerät, eine Sandstrahllanze oder einen Materialmischer beträgt, **dadurch gekennzeichnet, dass** besagte Vorrichtung (5) zumindest eine programmierbare Steuereinheit (50) beträgt, die ausgelegt ist, um besagten ersten Energieverbraucher (2) automatisch in Abhängigkeit einer für die tatsächliche Benutzung des zweiten Energieverbrauchers (4) repräsentative physikalische Größe mit Energie zu versorgen, um den Energieverbrauch in besagtem Raum (1) auf den tatsächlichen Bedarf des Bedieners zu begrenzen, und dass nach der Feststellung der tatsächliches Benutzung von besagtem zweiten Energieverbraucher (4), besagte Steuereinheit (50) ausgelegt ist, um den Betrieb dieses zweiten Energieverbrauchers zu unterbinden bis besagter erster Energieverbraucher (2) seinen nominalen Betriebszustand erreicht hat, um eine sichere Benutzung von besagtem Arbeitsraum (1) zu erlauben.

6. Vorrichtung nach Anspruch 5, **dadurch gekennzeichnet, dass** besagte Vorrichtung (5) zumindest einen Sensor (51) beträgt, der ausgelegt ist, um besagte für die tatsächliche Benutzung des zweiten Energieverbrauchers (4) repräsentative physikalische Größe zu messen.

7. Vorrichtung nach Anspruch 6, **dadurch gekennzeichnet, dass** besagter Sensor (51) ausgelegt ist, um eine in der Gruppe bestehend aus einer elektrischen, hydraulischen, lufttechnischen Größe gewählte physikalische Größe zu messen.

8. Vorrichtung nach Anspruch 6, in der besagter erster Energieverbraucher zumindest einen Lüfter (20, 21) beträgt, **dadurch gekennzeichnet, dass** besagte Vorrichtung (5) zumindest einen von besagter Steuereinheit (50) gesteuerten Frequenzumrichter (52, 53) beträgt, um die Geschwindigkeit von besagtem Lüfter (20, 21) in Abhängigkeit zumindest des Signals von besagtem Sensor (51) zwischen einer Null-Geschwindigkeit (Vo) und einer Nenn-Geschwindigkeit (Vn) variieren zu lassen.

9. Vorrichtung nach Anspruch 6, in der besagter erster Energieverbraucher zumindest eine Erwärmungsvorrichtung beträgt, **dadurch gekennzeichnet, dass** sie zumindest von besagter Steuereinheit (5) gesteuerte Regelungsmittel beträgt, um die Heizleistung in Abhängigkeit zumindest des Signals von besagtem Sensor (51) zwischen einer Null-Leistung und einer Nenn-Leistung variieren zu lassen.

10. Vorrichtung nach Anspruch 6, in der besagter erster Energieverbraucher zumindest eine Beleuchtungsvorrichtung beträgt, **dadurch gekennzeichnet, dass** sie zumindest ein von besagter Steuereinheit (5) gesteuertes Bedienteil beträgt, um die Beleuchtungsstärke in Abhängigkeit zumindest des Signals von besagtem Sensor (51) zwischen einem NullWert und einem Nenn-Wert variieren zu lassen.

11. Vorrichtung nach einem beliebigen der Ansprüche 5 bis 10, **dadurch gekennzeichnet, dass** besagte Steuereinheit (5) Verweilzeiten (T1, T2) beträgt, die ausgelegt sind, um die Ansteuerung von besagtem ersten Energieverbraucher (2) in Bezug auf das Signal von besagtem Sensor (51) zu verzögern.

12. Vorrichtung nach Anspruch 8, in der besagter Arbeitsraum eine Spritzkabine (1) ist und besagter zweiter Energieverbraucher eine durch einen Druckluftkreis gespeiste Spritzpistole (4) beträgt, **dadurch gekennzeichnet, dass** besagter Sensor (51) ein Durchflussmesser ist.

13. Vorrichtung nach Anspruch 12, **dadurch gekennzeichnet, dass** sie ein auf besagtem Druckluftkreislauf angeordnetes Magnetventil (47) beträgt, das von besagter Steuereinheit (5) gespeist wird, um den Druckluftkreislauf zu unterbrechen, solange der Lüfter (20, 21) seine Nenn-Geschwindigkeit (Vn) nicht erreicht hat, um einen sicheren Betrieb von besagter Spritzkabine (1) zu ermöglichen.

14. Benutzung der Vorrichtung (5) zur Verwaltung des Energieverbrauchs nach einem beliebigen der Ansprüche 5 bis 13 in einer Spritzkabine (1) mit einer Lüftungsvorrichtung (2) und zumindest einer von einem Druckluftkreislauf gespeister Spritzpistole (4).

15. Benutzung der Vorrichtung (5) zur Verwaltung des Energieverbrauchs nach einem beliebigen der Ansprüche 5 bis 13 in einer Schweißkabine mit einer Lüftungsvorrichtung und zumindest einem von einem Stromkreislauf gespeisten Schweißgerät.

16. Benutzung der Vorrichtung (5) zur Verwaltung des Energieverbrauchs nach einem beliebigen der Ansprüche 5 bis 13 in einer Sandstrahlkabine mit einer Lüftungsvorrichtung und zumindest einer von einem Druckluftkreislauf gespeisten Sandstrahllanze.

17. Benutzung der Vorrichtung (5) zur Verwaltung des Energieverbrauchs nach einem beliebigen der Ansprüche 5 bis 13 in einer Material-Mischkammer mit einer Lüftungsvorrichtung und zumindest einem von einem energieverbrauchenden Kreislauf gespeisten Materialmischer.

## Claims

1. Method for power consumption management in a work chamber (1) used for priming, painting, treating, sandblasting, welding, blending any type of parts and/or materials, by means of projection, spraying, impregnating with a liquid, gaseous, granular or pulverulent product, by welding or with a blender, comprising at least one equipment (2) necessary for the secure operation of said chamber and forming a first energy consumer, said equipment including a ventilation device, a lighting device and/or a heating device, this chamber being intended to contain at least one tool (4) or one appliance operating discontinuously and forming a second energy consumer, said tool or appliance including a spray gun, a welding outfit, a sandblasting gun or a material blender, **characterized in that** one controls automatically the energy supply of the first energy consumer (2) in function of the actual operation of the second energy consumer (4) in order to limit energy consumption in said chamber (1) to the real needs of the operator and **in that**, after detecting the actual operation of said second energy consumer (4), one inhibits the operation of this second energy consumer as long as said first energy consumer (2) did not reach its nominal operation, so as to allow secure operation of said work chamber (1).

2. Method according to claim 1, **characterized in that** one detects the actual operation of the second energy consumer (4) by means of at least one sensor (51) which measures a physical value representative of the actual operation of said second energy consumer (4).

3. Method according to claim 2, **characterized in that** one chooses said physical value in the group including an electrical, hydraulic, aeraulic value.

4. Method according to claim 2, **characterized in that** one introduces at least one dwell (T1, T2) to delay the energy supply of said first energy consumer (2) with respect to the signal provided by said sensor (51).

5. Device (5) for power consumption management in a work chamber (1) used for priming, painting, treating, sandblasting, welding, blending any type of parts and/or materials, by means of projection, spraying, impregnating with a liquid, gaseous, granular or pulverulent product, by welding or with a blender, comprising at least one equipment (2) necessary for the secure operation of said chamber and forming a first energy consumer, said equipment including a ventilation device, a lighting device and/or a heating device, this chamber being intended to contain at least one tool (4) or one appliance operating discontinuously and forming a second energy consumer, said tool or appliance including a spray gun, a welding outfit, a sandblasting gun or a material blender, **characterized in that** said device (5) includes at least one programmable control unit (50) arranged to supply automatically energy to said first energy consumer (2) in function of a physical value representative of the actual operation of the second energy consumer (4) in order to limit energy consumption in said chamber (1) to the real needs of the operator and **in that**, after detecting the actual operation of said second energy consumer (4), said control unit (50) is arranged to inhibit the operation of this second energy consumer as long as said first energy consumer (2) did not reach its nominal operation, so as to allow secure operation of said work chamber (1).

6. Device according to claim 5, **characterized in that** said device (5) includes at least one sensor (51) arranged to measure said physical value representative of the actual operation of the second energy consumer (4).

7. Device according to claim 6, **characterized in that** said sensor (51) is arranged to measure a physical value chosen in the group including an electrical, hydraulic, aeraulic value.

8. Device according to claim 6, wherein said first energy consumer includes at least one ventilator (20, 21), **characterized in that** said device (5) includes at least one frequency variator (52, 53) controlled by said control unit (50) to vary the speed of said ventilator (20, 21) between a zero speed (Vo) and a nominal speed (Vn) according at least to the signal of said sensor (51).

9. Device according to claim 6, wherein said first energy consumer includes at least one heating device, **characterized in that** it includes at least regulation means controlled by said control unit (5) to vary the heating power between a zero value and a nominal value according at least to the signal of said sensor (51).

10. Device according to claim 6, wherein said first energy consumer includes at least one lighting device, **characterized in that** it includes at least one control element controlled by said control unit (5) to vary the light intensity between a zero value and a nominal value according at least to the signal of said sensor (51).

11. Device according to any of claims 5 to 10, **characterized in that** said control unit (5) comprises dwells (T1, T2) arranged to delay the command of said first energy consumer (2) with respect to the signal of said sensor (51).

12. Device according to claim 8, wherein said work chamber is a spray booth (1) and said second energy consumer includes a spray gun (4) powered by a compressed air circuit, **characterized in that** said sensor (51) is a flow meter.

13. Device according to claim 12, **characterized in that** it comprises a solenoid valve (47) arranged on said compressed air circuit and powered by said control unit (5) to shut off the compressed air circuit as long as the ventilator (20, 21) did not reach its nominal speed (Vn) to allow the secure operation of said spray booth (1).

14. Use of device (5) for power consumption management according to any of claims 5 to 13 in a spray booth (1) comprising a ventilation device (2) and housing at least one spray gun (4) powered by a compressed air circuit.

15. Use of device (5) for power consumption management according to any of claims 5 to 13 in a welding booth comprising a ventilation device and housing at least one welding outfit powered by an electrical power circuit.

16. Use of device (5) for power consumption management according to any of claims 5 to 13 in a sandblasting booth comprising a ventilation device and housing at least one sandblasting gun powered by a compressed air circuit.

17. Use of device (5) for power consumption management according to any of claims 5 to 13 in a material blending booth comprising a ventilation device and housing at least one material blender powered by a circuit consuming electricity.
